# EUROPÄISCHE PATENTSCHRIFT

(11) **EP 0 931 009 B1**
(45) Veröffentlichungstag und Bekanntmachung des Hinweises auf die Patenterteilung: **19.07.2000**
(21) Anmeldenummer: 97937561.5
(22) Anmeldetag: 08.08.1997
(51) Int. Cl.: B65G 53/32, F17D 1/12, F17D 3/08

(54) **ANORDNUNG ZUR WEITFÖRDERUNG VON DICKSTOFFEN**
ARRANGEMENT FOR CONVEYING THICK MATTER
SYSTEME POUR ACHEMINER DES LIQUIDES

(30) Priorität: 08.10.1996 DE 19641174
(43) Veröffentlichungstag der Anmeldung: 28.07.1999
(73) Patentinhaber: PUTZMEISTER Aktiengesellschaft, 72631 Aichtal (DE)
(72) Erfinder: BACHNER, Ernst, D-80689 München (DE)
(74) Vertreter: Wolf, Eckhard, Dr.-Ing.
(86) Internationale Anmeldenummer: EP9704314
(87) Internationale Veröffentlichungsnummer: WO9815482

(56) Entgegenhaltungen:
- DE-A- 4 203 571
- GB-A- 2 162 142
- US-A- 3 811 248
- US-A- 4 373 225

## Beschreibung

Die Erfindung betrifft eine Anordnung zur Weitförderung von Dickstoffen, insbesondere von Beton, mit einer Dickstoffpumpe und einem über eine Hochdruckförderleitung an den Druckstutzen der Dickstoffpumpe anschließbaren Dickstoffverteiler.

Einer Weitförderung von Dickstoffen sind in Abhängigkeit von der Viskosität der Dickstoffe und der Wandreibung in der Hochdruckförderleitung enge Grenzen gesetzt. Um die erreichbare Förderstrecke zu verlängern, wurde bereits vorgeschlagen (EP-B 0 633 863) die Wandreibung durch Injektion eines Gleitmittels in den Bereich zwischen Rohrwand und Oberfläche eines sich im Förderrohr ausbildenden und entlang diesen transportierten Dickstoffstrangs zu reduzieren. Dieses Verfahren ist vor allem bei der Förderung von Dickstoffen mit hohem Feststoffanteil einsetzbar, bei der Förderstrecken von einigen hundert Metern erreicht werden sollen. Bei Dickstoffen mit höherem Flüssiganteil, wie Flüssigbeton, werden beispielsweise für den Tunnelbau Förderstrecken von einigen tausend Metern angestrebt, die allein durch die bekannte Gleitmittelinjektion nicht erreicht werden können.

Ausgehend hiervon liegt der Erfingung die Aufgabe zugrunde, eine Anordnung zur Weitförderung von Dickstoffen, insbesondere von Flüssigbeton, der eingangs angegebenen Art zu entwickeln, die es ermöglicht, die erreichbare Förderlänge bei gegebener Pumpleistung wesentlich zu erhöhen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt vor allem der Gedanke zugrunde, den Druckabfall in der Hochdruckförderleitung dadurch zu reduzieren, daß beim Fördervorgang nur ein Teil der Gesamtlänge der Hochdruckförderleitung mit den zu fördernden Dickstoffen beaufschlagt ist, während die Reststrecke, die länger als die jeweilige Dickstoffstrecke sein kann, mit einem Druckmittel niedrigerer Viskosität und geringerer Wandreibung beaufschlagt ist. Um dies zu erreichen wird gemäß der Erfindung vorgeschlagen, daß die Hochdruckförderleitung sowohl auf der Pumpenseite als auch auf der Verteilerseite an je eine abwechselnd zwischen zwei Anschlüssen umsteuerbare Rohrweiche angeschlossen ist, wobei die pumpenseitige Rohrweiche an ihrem einen Anschluß mit dem Druckstutzen der Dickstoffpumpe und an ihrem anderen Anschluß mit dem Druckstutzen einer eingangsseitig über einen Vorratsbehälter mit einem niedrigviskosen Druckmittel beaufschlagbaren Druckmittelpumpe verbunden ist, wobei die verteilerseitige Rohrweiche an ihrem einen Anschluß mit dem Dickstoffverteiler und an ihrem anderen Anschluß über eine Rückförderleitung mit dem Vorratsbehälter der Druckmittelpumpe verbunden ist und wobei die verteilerseitige Rohrweiche nach Maßgabe eines im ankommenden Fördergutstrom auftretenden Materialwechsels von Dickstoff zu Druckmittel oder Druckmittel zu Dickstoff umsteuerbar ist. Zweckmäßig ist hierfür ein auf den Materialwechsel im Fördergutstrom ansprechender, den Umsteuervorgang der verteilerseitigen Rohrweiche auslösender Sensor vorgesehen.

Im stationären Betrieb der Förderanordnung ist es von Vorteil, wenn die pumpenseitige Rohrweiche in Abhängigkeit von der verteilerseitigen, vorzugsweise synchron mit dieser Rohrweiche umsteuerbar ist. In diesem Falle wird erreicht, daß entlang der Förderstrecke immer die gleiche Dickstoffmenge und die gleiche Druckmittelmenge vorhanden sind und sich bei gegebener Konsistenz der Dickstoffe ein annähernd gleichbleibender Druckabfall einstellt.

Um eine Durchmischung zwischen den zu fördernden Dickstoffen und dem Druckmittel im Bereich der Trennstelle zu vermeiden und das Auftreten eines Materialwechsels sensorisch leichter erfassen zu können, wird gemäß einer bevorzugten Ausgestaltung der Erfindung vorgeschlagen, daß in die Hochdruckförderleitung im Bereich der pumpenseitigen Rohrweiche eine Molchschleuse mündet, über die bei jeder Umsteuerung der pumpenseitigen Rohrweiche mindestens ein an den Leitungsquerschnitt angepaßter Trennkörper in die Hochdruckförderleitung einbringbar ist. Andererseits kann die Hochdruckförderleitung im Bereich der verteilerseitigen Rohrweiche oder die Rückförderleitung im Bereich des Vorratsbehälters eine Molchschleuse oder einen Molchfänger zum Ausschleusen der ankommenden Trennkörper aufweisen. Um die verteilerseitige Rohrweiche immer im rechten Augenblick umsteuern zu können, ist es von Vorteil, wenn in der Nähe der betreffenden Rohrweiche ein auf einen ankommenden Trennkörper ansprechender, den Umsteuervorgang auslösender Sensor angeordnet ist. Der Sensor ist dabei beispielsweise als auf das Vorhandensein eines Trennkörpers ansprechender Magnetsensor oder Ultraschallsensor ausgebildet.

Vor allem in der Anfahrphase und bei der Förderung von Dickstoffen wechselnder Konsistenz hat es sich als vorteilhaft erwiesen, wenn ein auf einen definierten Förderdruck der Dickstoffpumpe oder einen definierten Druckabfall in der Hochdruckförderleitung ansprechender Sensor zur Umsteuerung der pumpenseitigen Rohrweiche vorgesehen ist. Mit einer solchen Maßnahme ist es möglich, die Förderanordnung bei gegebener Förderleistung immer bei optimaler Dickstoff-Fördermenge zu betreiben. Zur Vermeidung von Betriebsstörungen ist es wichtig, daß in der von der Druckmittelpumpe zur pumpenseitigen Rohrweiche führenden Leitung ein Rückflußverhinderer angeordnet ist.

Die erfindungsgemäße Weitförderanordnung wird zweckmäßig im Tunnelbau eingesetzt. In diesem Falle kann der Dickstoffverteiler als Tunnelschalungsverteiler ausgebildet werden.

Im Falle von Flüssigbeton als zu förderndem Dickstoff wird als Druckmittel zweckmäßig Wasser oder ein niedrig-viskoses Bentonit-Wassergemisch oder ein Flüssig-Polymer verwendet.

Im folgenden wird die Erfindung anhand eines in der Zeichnung in schematischer Weise dargestellten Ausführungsbeispiels näher erläutert. Es zeigen:
- Fig. 1: ein Schema einer Förderanordnung für Flüssigbeton für die Tunnelbetonierung;
- Fig. 2: einen Ausschnitt aus der Anordnung nach Fig. 1 mit gegenüber Fig. 1 umgesteuerten Rohrweichen.

Die in der Zeichnung schematisch dargestellte stationäre Pumpanordnung ist zur Weitförderung von Beton zu einem in einem Tunnel 11 befindlichen Tunnelschalungsverteiler 10 bestimmt. Sie besteht im wesentlichen aus einer vorzugsweise als Zweizylinder-Kolbenpumpe ausgebildeten Dickstoffpumpe 12, die über einen großen Materialaufgabebehälter 14 mit Flüssigbeton beschickt wird, einer als Zweizylinder-Kolbenpumpe ausgebildeten Druckmittelpumpe 16, die über einen großen Vorratsbehälter 18 mit einem beispielsweise aus einem Bentonit-Wassergemisch bestehenden Druckmittel beschickt wird, einer sich zwischen den beiden stationär angeordneten Pumpen 12, 16 einerseits und dem Tunnelschalungsverteiler 10 andererseits erstreckenden, etwa 5000 m langen Hochdruckförderleitung 20 und je einer an das pumpenseitige und das verteilerseitige Ende der Hochdruckförderleitung 20 angeschlossenen, abwechselnd zwischen zwei Anschlüssen umsteuerbaren Rohrweichen 22, 24. Die pumpenseitige Rohrweiche 22 ist dabei mit ihrem einen Anschluß 26 über eine Leitung 28 mit dem Druckstutzen 30 der Dickstoffpumpe 12 verbunden, während der zweite Anschluß 32 der Rohrweiche 22 über eine Leitung 34 an den Druckstutzen 36 der Druckmittelpumpe 16 angeschlossen ist. In der Leitung 34 ist aus Sicherheitsgründen ein von der Druckmittelpumpe 16 zur Rohrweiche 22 öffnender und in der Gegenrichtung schließender Rückflußverhinderer 38 angeordnet.

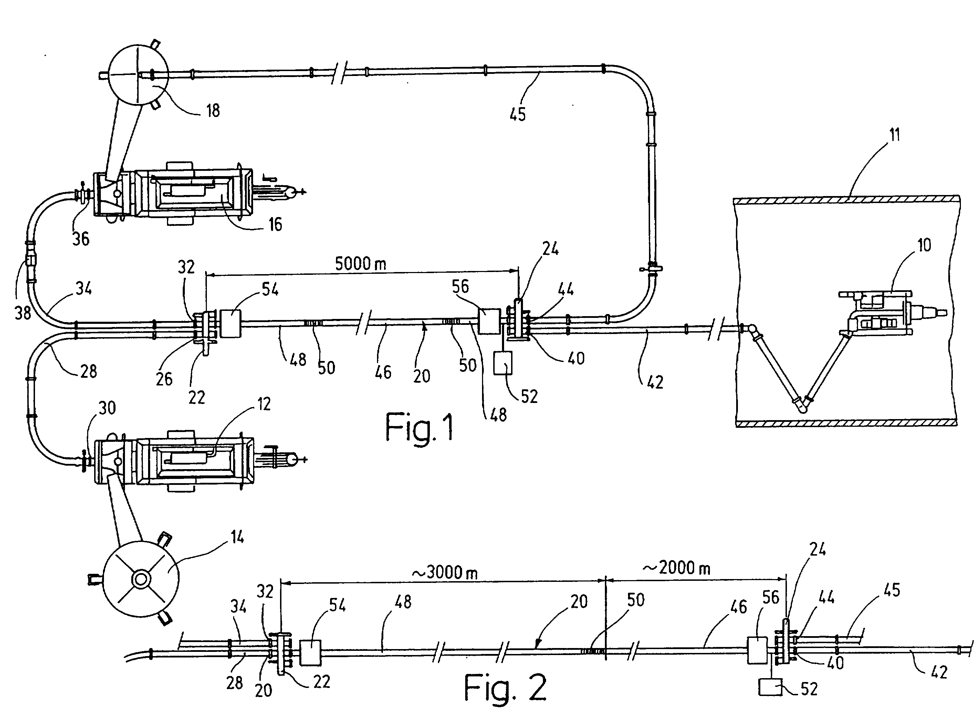

Die verteilerseitige Rohrweiche 24 ist mit ihrem einen Anschluß 40 über eine Betonleitung 42 an den Tunnelschalungsverteiler 10 angeschlossen, während sie an ihrem Anschluß 44 über eine Rückförderleitung 45 für das Bentonit-Wassergemisch mit dem Vorratsbehälter 18 verbunden ist. In der in Fig. 1 gezeigten Stellung kommuniziert die Hochdruckförderleitung 20 über die Rohrweiche 22 mit der Druckmittelpumpe 16 und über die Rohrweiche 24 mit dem Vorratsbehälter 18, während in der in Fig. 2 gezeigten Stellung die Hochdruckförderleitung 20 über die Rohrweiche 22 mit der Dickstoffpumpe 12 und über die Rohrweiche 24 mit dem Tunnelschalungsverteiler 10 verbunden ist. Durch eine geeignete Ansteuerung der Rohrweiche 22 ist es möglich, die Hochdruckförderleitung 20 abwechselnd mit Beton und mit dem Druckmittel zu beaufschlagen. Bei dem in Fig. 2 gezeigten Ausführungsbeispiel befindet sich in dem Leitungsabschnitt 46 mit einer Länge von etwa 2000 m Flüssigbeton und in dem Leitungsabschnitt 48 mit einer Länge von 3000 m Druckmittel. An der Trennstelle zwischen Beton und Druckmittel befindet sich ein als Molch ausgebildeter Trennkörper 50, der eine Durchmischung von Beton und Druckmittel verhindert und der von außen her zur Umschaltung der verteilerseitigen Rohrweiche 24 leicht detektierbar ist. Um letzteres zu ermöglichen, kann der Trennkörper 50 mit einem magnetischen oder magnetisierbaren Material bestückt werden, das mit einem in der Nähe der verteilerseitigen Rohrweiche 24 angeordneten Magnetsensor 52 lokalisiert und zur Auslösung eines Umsteuersignals verwendet werden kann.

Die Trennkörper 50 werden zweckmäßig über eine Molchschleuse 54 bei jedem Umschaltvorgang der Rohrweiche 22 in die Hochdruckförderleitung 20 eingeschleust und über eine Molchschleuse 56 im Zuge der Umsteuerung der verteilerseitigen Rohrweiche 24 aus der Hochdruckförderleitung 20 ausgeschleust. Grundsätzlich ist es möglich, die Molchschleuse 56 statt vor der Rohrweiche 24 im Bereich des Vorratsbehälters 18 anzuordnen. In diesem Falle wird der Trennkörper 50 über die Rückförderleitung 45 zur Pumpenseite zurücktransportiert.

Zusammenfassend kann die Anordnung wie folgt beschrieben werden : Die Anordnung zur Weitförderung von Dickstoffen, insbesondere von Flüssigbeton enthält eine eingangsseitig zu fördernden Dickstoffen beschickbare Dickstoffpumpe 12 und eine über eine Hochdruckförderleitung 20 an den Druckstutzen 30 der Dickstoffpumpe 12 anschließbaren, vorzugsweise als Tunnelschalungsverteiler ausgebildeten Dickstoffverteiler 10 auf. Die Hochdruckförderleitung 20 ist sowohl auf der Pumpenseite als auch auf der Verteilerseite an je eine abwechselnd zwischen zwei Anschlüssen 26,32, 40,44 umsteuerbare Rohrweiche 22, 24 angeschlossen. Die pumpenseitige Rohrweiche 22 ist dabei an ihrem einen Anschluß 26 mit dem Druckstutzen 30 der Dickstoffpumpe 12 und an ihren anderen Anschluß 32 mit dem Druckstutzen 36 einer über einen Vorratsbehälter 18 mit einem niedrigviskosen Druckmittel beaufschlagbaren Druckmittelpumpe 16 verbunden. Andererseits ist die verteilerseitige Rohrweiche 24 mit ihrem einen Anschluß 40 mit dem Dickstoffverteiler 10 und mit ihrem anderen Anschluß 44 über eine Rückförderleitung 45 mit dem Vorratsbehälter 18 der Druckmittelpumpe 16 verbunden. Um eine Fehlbeaufschlagung auf der Verteilerseite zu vermeiden, ist die verteilerseitige Rohrweiche 24 nach Maßgabe eines im ankommenden Fördergutstrom auftretenden Materialwechsels umsteuerbar.

## Patentansprüche

1. Anordnung zur Weitförderung von Dickstoffen, insbesondere von Flüssigbeton, mit einer eingangsseitig mit den zu fördernden Dickstoffen beschickbaren Dickstoffpumpe (12) und einem über eine Hochdruckförderleitung (20) an den Druckstutzen (30) der Dickstoffpumpe (12) anschließbaren Dickstoffverteiler (10), **dadurch gekennzeichnet**, daß die Hochdruckförderleitung (20) sowohl auf der Pumpenseite als auch auf der Verteilerseite an je eine abwechselnd zwischen zwei Anschlüssen (26,32,40,44) umsteuerbare Rohrweiche (22, 24) angeschlossen ist, wobei die pumpenseitige Rohrweiche (22) an ihrem einen Anschluß (26) mit dem Druckstutzen (30) der Dickstoffpumpe (12) und an ihrem anderen Anschluß (32) mit dem Druckstutzen (36) einer eingangsseitig über einen Vorratsbehälter (18) mit einem niedrigviskosen Druckmittel beaufschlagbaren Druckmittelpumpe (16) verbunden ist, wobei die verteilerseitige Rohrweiche (24) an ihrem einen Anschluß (40) mit dem Dickstoffverteiler (10) und an ihrem anderen Anschluß (44) über eine Rückförderleitung (45) mit dem Vorratsbehälter (18) der Druckmittelpumpe (16) verbunden ist, und wobei die verteilerseitige Rohrweiche (24) nach Maßgabe eines im ankommenden Fördergutstrom auftretenden Materialwechsels umsteuerbar ist.

2. Anordnung nach Anspruch 1, **gekennzeichnet durch** einen auf den Materialwechsel im Fördergutstrom ansprechenden, den Umsteuervorgang der verteilerseitigen Rohrweiche (24) auslösenden Sensor (52).

3. Anordnung nach Anspruch 1 oder 2, **dadurch gekennzeichnet**, daß die pumpenseitige Rohrweiche (22) in Abhängigkeit von der verteilerseitigen Rohrweiche vorzugsweise synchron mit dieser umsteuerbar ist.

4. Anordnung nach einem der Ansprüche 1 bis 3, **gekennzeichnet durch** eine im Bereich der pumpenseitigen Rohrweiche (22) in die Hochdruckförderleitung (20) mündende Molchschleuse (54), über die bei jeder Umsteuerung der pumpenseitigen Rohrweiche (22) mindestens ein an den Leitungsquerschnitt der Hochdruckförderleitung angepaßter Trennkörper (50) in die Hochdruckförderleitung (20) einbringbar ist.

5. Anordnung nach Anspruch 4, **dadurch gekennzeichnet**, daß im Bereich der verteilerseitigen Rohrweiche (24) ein auf einen ankommenden Trennkörper (50) ansprechender, den Umsteuervorgang der verteilerseitigen Rohrweiche (24) auslösender Sensor (52) angeordnet ist.

6. Anordnung nach Anspruch 4 oder 5, **dadurch gekennzeichnet**, daß die Hochdruckförderleitung (20) im Bereich der verteilerseitigen Rohrweiche (24) oder die Rückförderleitung (45) im Bereich des Vorratsbehälters (18) eine Molchschleuse (56) zum Ausschleusen der ankommenden Trennkörper (50) aufweist.

7. Anordnung nach einem der Ansprüche 2 bis 6, **dadurch gekennzeichnet**, daß der Sensor (52) als auf das Vorhandensein eines Trennkörpers (50) in der Hochdruckleitung (20) ansprechender Magnetsensor oder Ultraschallsensor ausgebildet ist.

8. Anordnung nach einem der Ansprüche 1 bis 7, **gekennzeichnet durch** einen auf einen definierten Förderdruck der Dickstoffpumpe (12) oder auf einen definierten Druckabfall in der Hochdruckförderleitung (20) ansprechenden Sensor zur Umsteuerung der pumpenseitigen Rohrweiche (22).

9. Anordnung nach einem der Ansprüche 1 bis 8, **dadurch gekennzeichnet**, daß in der von der Druckmittelpumpe (16) zur pumpenseitigen Rohrweiche (22) führenden Leitung ein Rückflußverhinderer (38) angeordnet ist.

10. Anordnung nach einem der Ansprüche 1 bis 9, **dadurch gekennzeichnet**, daß der Dickstoffverteiler (10) als Tunnelschalungsverteiler ausgebildet ist.

11. Anordnung nach einem der Ansprüche 1 bis 10, **dadurch gekennzeichnet**, daß im Falle von Flüssigbeton als zu förderndem Dickstoff Wasser oder ein Betonit-Wassergemisch oder ein niedrig-viskoses Flüssig-Polymer als Druckmittel verwendet wird.

## Claims

1. An arrangement for long-distance conveying of thick matter, in particular liquid concrete, comprising a thick matter pump (12), the input of which is adapted to be charged with the thick matter to be conveyed, and a thick matter distributor (10) which is adapted to be coupled to a pressure joint (30) of the thick matter pump (12) by way of a high pressure feed line (20), **characterized in that** the high pressure feed line (20) is connected to a pipe-switching device (22, 24) on the pump side as well as on the distributor side, each of which pipe switching devices is adapted to be alternatingly switched to two connections (26, 32, 40 , 44), wherein the pipe switching device (22) on the pump side is connected to the pressure joint (30) of the thick matter pump (12) with its one connection (26), and at its other connection (32) to the pressure joint (36) of a thick matter pump (16) which is adapted to be charged with a low-viscosity pressure medium by way of a reservoir (18), wherein the pipe-switching device (24) at the distributor side is connected at its one connection (40) to the thick matter distributor (10) and at its other connection (44) to the reservoir (18) of the pressure medium pump (16) by way of a return feed line (45), and wherein the pipe-switching device (24) on the distributor side is adapted to be switched in response to a material change occurring in the incoming material flow.

2. The arrangement of claim 1, **characterized by** a sensor (52) which responds to a material change in the material flow and activates the switching operation of the pipe-switching device on the distributor side.

3. The arrangement of claim 1 or 2, **characterized in that** the pipe-switching device (22) on the pump side is adapted to be switched as a function of, preferably synchronous to, the pipe-switching device on the distributor side.

4. The arrangement of one of claims 1 to 3, **characterized by** a pig trap (54) connected to the high pressure feed line (20) in the region of the pipe switching device (22) on the pump side, by way of which pig trap at least one partitioning member (50) which is adapted to the cross section of the high pressure feed line is introduced into the high pressure feed line (20) at each switching of the pipe switching device (22) on the pump side.

5. The arrangement of claim 4, **characterized in that** a sensor (52) which responds to an arriving partitioning member (50) and which initiates the switching operation of the pipe switching device (24) on the distributor side is disposed in the region of the pipe switching device (24) on the distributor side.

6. The arrangement of claim 4 or 5, **characterized in that** the high pressure feed line (20) in the region of the pipe switching device (24) on the distributor side or the return feed line (45) in the region of the reservoir (18) comprises a pig trap (56) for extracting the incoming partitioning members (50).

7. The arrangement of one of claims 2 to 6, **characterized in that** the sensor (52) is designed to be a magnetic or ultrasonic sensor which responds to the presence of a partitioning member (50) in the high pressure feed line (20).

8. The arrangement of one of claims 1 to 7, **characterized by** a sensor for initiating the switching of the pipe switching device (22) on the pump side, which sensor responds to a defined feed pressure of the thick matter pump (12) or a defined pressure decline in the high pressure feed line (20).

9. The arrangement of one of claims 1 to 8, **characterized in that** a backflow prevention device (38) is disposed in the feed line leading from the pressure medium pump (16) to the pipe switching device (22) on the pump side.

10. The arrangement of one of claims 1 to 9, **characterized in that** the thick matter distributor (10) is designed to be a tunnel shuttering distributor.

11. Use of an arrangement of one of claims 1 to 10, **characterized in that** in the instance of liquid concrete being the thick matter to be conveyed, water or a concrete-water-mixture or a low-viscosity liquid polymer is used as a pressure medium.

## Revendications

1. Système pour acheminer des liquides épais, notamment du béton liquide, avec une pompe à liquides épais (12) pouvant être, du côté d'entrée, chargée en liquides épais à acheminer, et avec un distributeur de liquides épais (10) pouvant être raccordé par l'intermédiaire d'une conduite d'acheminement à haute pression (20) au raccord de refoulement (30) de la pompe à liquides épais (12), **caractérisé** en ce que la conduite d'acheminement à haute pression (20) est raccordée, tant du côté pompe que du côté distributeur, à un aiguillage de conduite (22, 24) respectif pouvant être alternativement commuté entre deux branchements (26, 32, 40, 44), l'aiguillage de conduite côté pompe (22) étant relié par l'un (26) de ses branchements au raccord de refoulement (30) de la pompe à liquides épais (12) et par son autre branchement (32) au raccord de refoulement (36) d'une pompe de fluide sous pression (16) pouvant être alimentée du côté d'entrée, à partir d'un réservoir de stockage (18), en fluide sous pression de basse viscosité, l'aiguillage de conduite côté distributeur (24) étant relié par l'un (40) de ses branchements au distributeur de liquides épais (10) et par son autre branchement (44), par l'intermédiaire d'une conduite de retour (45), au réservoir de stockage (18) de la pompe de fluide sous pression (16), et l'aiguillage de conduite côté distributeur (24) pouvant être commuté en fonction d'un changement de matériau apparaissant dans le flux entrant de produit à acheminer.

2. Système selon la revendication 1, **caractérisé** par un capteur (52) réagissant au changement de matériau apparaissant dans le flux de produit à acheminer et déclenchant le processus de commutation de l'aiguillage de conduite côté distributeur (24).

3. Système selon la revendication 1 ou 2, **caractérisé** en ce que l'aiguillage de conduite côté pompe (22) peut être commuté en fonction de l'aiguillage de conduite côté distributeur, de préférence en synchronisme avec ce dernier.

4. Système selon une des revendications 1 à 3, **caractérisé** par un sas pour racleurs (54), qui débouche dans la conduite d'acheminement à haute pression (20) dans la région de l'aiguillage de conduite côté pompe (22) et par lequel, à chaque commutation de l'aiguillage de conduite côté pompe (22), au moins un corps de séparation (50), adapté à la section de la conduite d'acheminement à haute pression, peut être introduit dans la conduite d'acheminement à haute pression (20).

5. Système selon la revendication 4, **caractérisé** en ce qu'un capteur (52) réagissant à l'arrivée d'un corps de séparation (50) et déclenchant le processus de commutation de l'aiguillage de conduite côté distributeur (24) est disposé dans la région de l'aiguillage de conduite côté distributeur (24).

6. Système selon la revendication 4 ou 5, **caractérisé** en ce que la conduite d'acheminement à haute pression (20) dans la région de l'aiguillage de conduite côté distributeur (24), ou la conduite de retour (45) dans la région du réservoir de stockage (18), présente un sas pour racleurs (56) pour retirer les corps de séparation (50) arrivant.

7. Système selon une des revendications 2 à 6, **caractérisé** en ce que le capteur (52) est conçu comme capteur à ultrasons ou capteur magnétique réagissant à la présence d'un corps de séparation (50) dans la conduite à haute pression (20).

8. Système selon une des revendications 1 à 7, **caractérisé** par un capteur pour commuter l'aiguillage de conduite côté pompe (22) qui réagit à une pression définie de refoulement de la pompe à liquides épais (12) ou à une chute définie de pression dans la conduite d'acheminement à haute pression (20).

9. Système selon une des revendications 1 à 8, **caractérisé** en ce qu'un dispositif de non-retour (38) est disposé dans la conduite menant de la pompe de fluide sous pression (16) à l'aiguillage de conduite côté pompe (22).

10. Système selon une des revendications 1 à 9, **caractérisé** en ce que le distributeur de liquides épais (10) est conçu comme distributeur pour le coffrage de tunnels.

11. Utilisation d'un système selon une des revendications 1 à 10, **caractérisée** en ce que, si le liquide épais à acheminer est du béton liquide, on utilise comme fluide sous pression de l'eau ou un mélange de bentonite et d'eau ou un polymère liquide de basse viscosité.
